# EUROPÄISCHE PATENTSCHRIFT

(11) **EP 1 175 323 B1**
(45) Veröffentlichungstag und Bekanntmachung des Hinweises auf die Patenterteilung: **30.03.2005**
(21) Anmeldenummer: 00931055.8
(22) Anmeldetag: 04.04.2000
(51) Int. Cl.: B60T 13/567

(54) **PNEUMATISCHER BREMSKRAFTVERSTÄRKER**
PNEUMATIC BRAKE BOOSTER
SERVOFREIN PNEUMATIQUE

(30) Priorität: 09.04.1999 DE 19915941
(43) Veröffentlichungstag der Anmeldung: 30.01.2002
(73) Patentinhaber: Continental Teves AG & Co. oHG, 60488 Frankfurt (DE)
(72) Erfinder: FALLER, Jürgen, D-63796 Kahl (DE)
(86) Internationale Anmeldenummer: PCT/EP2000/002991
(87) Internationale Veröffentlichungsnummer: WO 2000/061416

(56) Entgegenhaltungen:
- EP-A- 0 009 393
- DE-A- 4 204 419
- GB-A- 2 093 136

## Beschreibung

Die Erfindung betrifft einen pneumatischen Bremskraftverstärker mit Mitteln zum Befestigen desselben an einer fahrzeugfesten Wand welche das Innere des Bremskraftverstärker durchgreifen, wobei an einem ersten Ende des Befestigungsmittels ein fester Anschlag für ein erstes Gehäuseteil und an einem zweiten Ende ein mittels Drehbewegung einstellbarer Anschlag für ein zweites Gehäuseteil vorgesehen ist, und mit Mitteln zum pneumatischen Abdichten von Gehäuseöffnungen für das Befestigungsmittel.

Ein derartiger Bremskraftverstärker ist beispielsweise aus der DE 32 04 549 A 1 bekannt. Dort ist im Bereich einer Gehäuseöffnung für das Befestigungsmittel ein zylindrisch abgekröpfter Gehäusebereich vorgesehen, welcher einen in Richtung axial nach innen einstellbaren Anschlag aufweist. Ferner übergreift der als Mutter ausgebildete Anschlag mit einem ringförmig nach axial außen weisenden Vorsprung den genannten zylindrischen Bereich und zwar derart, daß ein ringförmiger Zwischenraum für einen Dichtring vorgesehen ist. Der Dichtring dichtet infolge radialer Kompression einen Spalt zwischen Mutter und Gehäuse ab. Für die Abdichtung des Gewinde zwischen Befestigungsmittel und Mutter dient der Dichtring nicht. Hierfür wird eine im Ursprungszustand flüssige Dichtungsmasse verwendet, welche auf das Gewinde oder nach der Montage des Bremskraftverstärkers auf die Mutter aufgetragen wird und sodann abbindet. Die Dichtungsmasse verhindert gleichzeitig ein unbeabsichtigtes Verdrehen des einstellbaren Anschlag.

Die Abdichtung der Gehäuseöffnungen wie auch die Verdrehsicherung des einstellbaren Anschlag wird als verbesserungswürdig angesehen. Einerseits besteht das Bedürfnis, eine selbstverstärkende Dichtungsanordnung bereitzustellen, bei der eine erhöhte Druckdifferenz zwischen dem Inneren des Bremskraftverstärkers und der Außenumgebung eine erhöhte Dichtwirkung bereitstellt.

Bei dem bekannten Bremskraftverstärker ist nicht ausgeschlossen, daß eine Ermüdung des Dichtringes zu einer nachlassenden Dichtwirkung führt. Ferner soll die Montage des Dichtringes möglichst einfach und reproduzierbar vorgenommen werden. Bei der Anordnung nach dem oben genannten Stand der Technik besteht die Möglichkeit, daß der Dichtring durch das Aufschrauben der Mutter infolge scharfer Körperkanten beschädigt wird. Zwar ist es zur Verbesserung dieser Problematik auch bekannt geworden, den Dichtring an einer Stirnseite (gehäuseseitig) der Mutter anzuordnen. Diese Maßnahme reduziert den Gesamtaufwand für die Abdichtung und insbesondere den mit dem Auftragen der Dichtmasse verbundenen Aufwand nicht.

Aufgabe der Erfindung ist, die geschilderten Nachteile zu vermeiden und insbesondere eine einfache Lösung für die Abdichtung bereitzustellen. Eine weitere Aufgabe der Erfindung besteht darin, eine andere Verdrehsicherung für den einstellbaren Anschlag anzugeben.

Es wurde gefunden, daß diese Aufgabe mit den Merkmalen des kennzeichnenden Teiles des Patentanspruches 1 dadurch gelöst wird, daß das Befestigungsmittel einen sich an den Stellbereich des einstellbaren Anschlag anschließenden glatten Dichtabschnitt aufweist, und daß das Dichtungsmittel mit multilateraler Anlage an einer kegelförmigen Anlagefläche des einstellbaren Anschlag, dem glatten Dichtabschnitt und dem zugeordneten Gehäuseteil einen Spalt zwischen Befestigungsmittel und einstellbarem Anschlag sowie einen Spalt zwischen Befestigungsmittel und Gehäuseteil verschließt.

Erfindungsgemäß kann auf einen zylindrisch in Richtung Anschlag ragenden Gehäuseabschnitt für eine Dichtungsanlage verzichtet werden. Die kegelförmige Anlagefläche für das Dichtungsmittel minimiert Beschädigungen im Rahmen der Montage und ermöglicht ferner zusammen mit weiteren kennzeichnenden Merkmalen eine dreiseitige Anlage, nämlich am Gehäuseteil, am Befestigungsmittel und am Anschlag. Durch diese Maßnahme werden die beiden Spalte mit nur einem Bauteil verschlossen, so daß der Aufwand für die Abdichtung erheblich reduziert ist. Es ist weiterhin vorteilhaft, daß sich das Dichtungsmittel während der Montage selbsttätig zentriert. Schließlich ist eine Selbstverstärkung der Dichtwirkung gegeben, weil zumindest ein Teil des Zwischenraumes für das Dichtungsmittel permanent unter Unterdruck steht, so daß der von außen wirkende Umgebungsluftdruck den entsprechenden Gehäusebereich des Gehäuseteiles zur Verstärkung der Dichtwirkung permanent in Richtung Dichtungsmittel drückt.

Weitere Vorteile der Erfindung gehen aus Unteransprüchen im Zusammenhang mit der Beschreibung und der Zeichnung hervor. Die Erfindung wird nachstehend anhand eines Ausführungsbeispieles, welches in der Zeichnung dargestellt ist, näher erläutert. In der Zeichnung zeigt:
- Fig. 1: Bremskraftverstärker gemäß dem Stand der Technik im Schnitt;
- Fig. 2: eine Einzelheit eines Bremskraftverstärkers gemäß der Erfindung im Schnitt sowie in vergrößertem Maßstab.

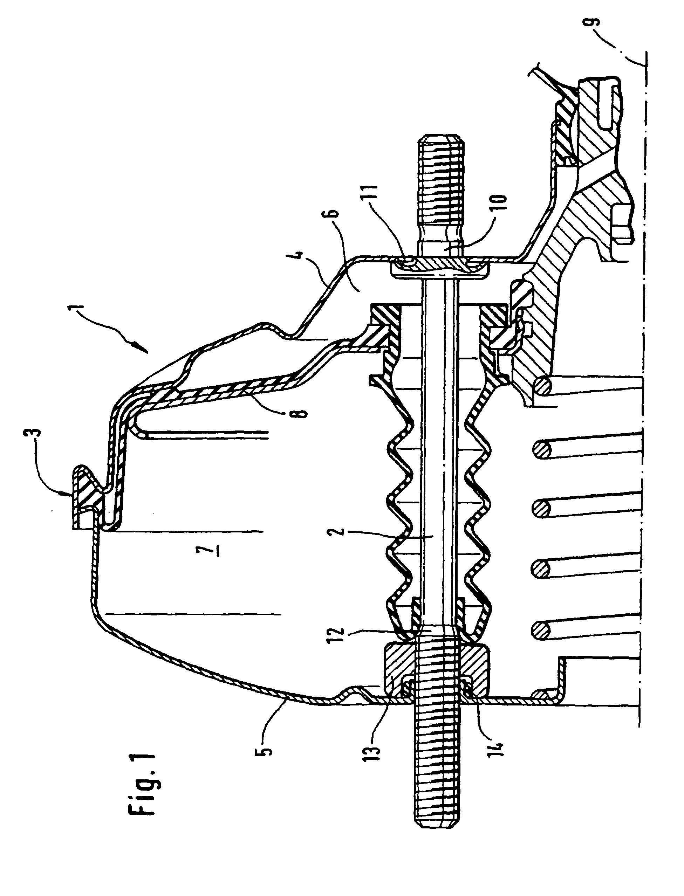

Der Fig. 1 ist ein pneumatischer Bremskraftverstärker nach dem Stand der Technik zu entnehmen, welcher ein Befestigungsmittel 2 aufweist, das durch das Innere des Bremskraftverstärkers 1 hindurchragt, und mit einem Endstück aus einer linken Stirnseite zur Befestigung eines nicht gezeichneten Hauptbremszylinders herausragt. Die Einheit aus Bremskraftverstärker 1 und Hauptbremszylinder ist mit einem aus der rechten Stirnseite herausragenden Endstück des Befestigungsmittels 2 zur Befestigung an einer nicht gezeichneten Wand eines Kraftfahrzeuges vorgesehen. Der Bremskraftverstärker 1 besitzt ein Gehäuse 3 aus mindestens zwei aneinander befestigten Gehäuseteilen 4,5. Im Inneren des Gehäuse 3 befindet sich u.a. eine erste pneumatische Kammer 6, nämlich eine Arbeitskammer und eine zweite pneumatische Kammer 7, nämlich eine Vakuumkammer. Die beiden pneumatischen Kammern 6,7 sind durch eine bewegliche Wand 8 voneinander getrennt und in Abhängigkeit von dem jeweiligen Betätigungszustand befindet sich in der ersten pneumatischen Kammer 6 ein Druck, welcher dem Druck in der zweiten pneumatischen Kammer 7, dem äußeren Atmosphärenluftdruck oder einem Druck zwischen diesen beiden Extremwerten entspricht. Auf die genaue Funktion des Bremskraftverstärkers 1 mu8 in diesem Zusammenhang nicht weiter eingegangen werden. Das Innere des Bremskraftverstärkers 1, das hei8t auch die beiden Kammern 6,7 werden von dem Befestigungsmittel 2 durchgriffen. Ferner sorgt das Befestigungsmittel 2 fhr eine Abstützung der beiden Gehäuseteile 4,5 zueinander in Richtung einer Achse 9. Zu diesem Zweck ist an einem ersten rechten Ende 10 ein fester Anschlag 11 zur Anlage des ersten Gehäuseteiles 4 und an einem zweiten linken Ende 12 ein mittels Drehbewegung einstellbarer Anschlag 13 zur Anlage des zweiten Gehäuseteiles 5 vorgesehen. Durch diese Maßnahme ist der Abstand zwischen den beiden Gehäuseteilen 4,5 definiert einstellbar, selbst wenn vergleichsweise dünne und unter der Druckdifferenz deformierbare Werkstoffe für die Gehäuseteile 4,5 verwendet werden. Es sind schließlich Dichtungsmittel 14 zur Abdichtung der Gehäuseöffnungen für das Befestigungsmittel 2 vorgesehen.

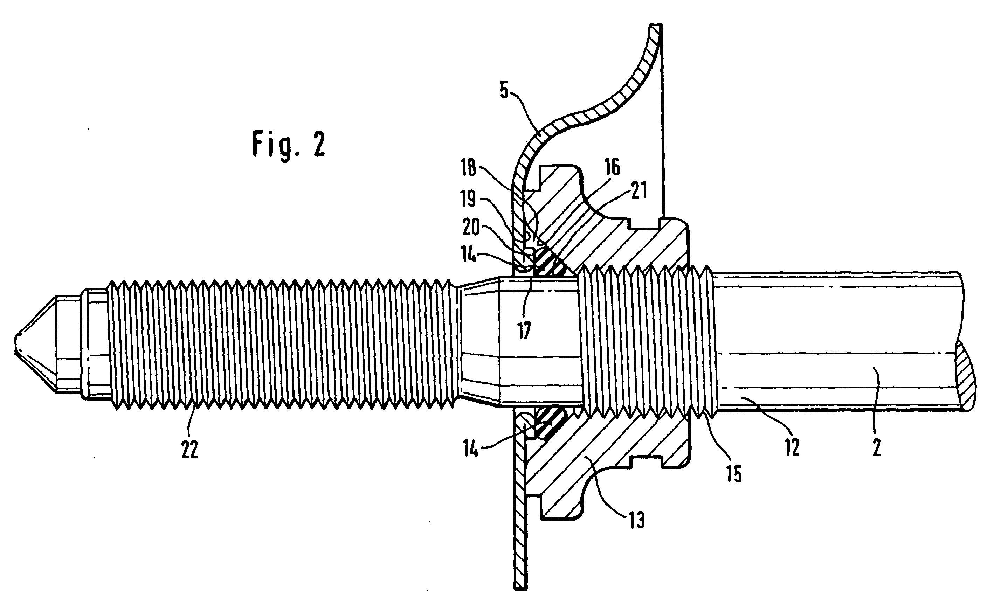

Der Figur 2 sind die Einzelheiten an einem linken Ende eines Befestigungsmittels 2 bei einem Bremskraftverstärker gemäß der Erfindung zu entnehmen. Mit Fig. 1 übereinstimmende Merkmale sind mit übereinstimmenden Bezugsziffern gekennzeichnet. Der Anschlag 13 ist als Mutter ausgebildet, welche sich auf einem Gewindeabschnitt 15 des Befestigungsmittels 2 befindet. Der Anschlag 13 verfügt über eine Stirnseite zur Anlage an dem Gehäuseteil 5, welche nach radial innen in eine kegelförmige Anlagefläche 16 für das Dichtungsmittel 14 übergeht. Die axiale Länge des genannten Gewindeabschnitt 15 definiert die Länge des Stellbereich des Anschlags 13. Endseitig schließt sich an den Stellbereich ein glatter Dichtabschnitt 17 an, welcher einen geringeren Durchmesser als der Kerndurchmesser des Gewindeabschnitt 15 aufweist. Es ist der Figur zu entnehmen, daß sich das Dichtungsmittel 14 in einem kegeltorusförmigen Zwischenraum 18 befindet, dessen Wände von der kegelförmigen Anlagefläche 16 des Anschlags 13, dem glatten Dichtabschnitt 17 und einer Innenseite 19 des Gehäuseteil 5 gebildet sind. Es kommt somit zu einer multilateralen, gemäß dem Ausführungsbeispiel dreiseitigen Anlage des Dichtungsmittels 14, so daß ein Spalt 20 zwischen Anschlag 13 und Gehäuseteil 5 verschlossen ist. Weiterhin ist auch ein Spalt 21 zwischen Anschlag 13 und Befestigungsmittel 2 durch die Anlage an dem glatten Dichtabschnitt 17 verschlossen. Folglich verschließt das Dichtungsmittel 14 zwei Spalte 20, 21, welche jeweils ausgehend von dem Bremskraftverstärkerinneren in den Zwischenraum 18 einmünden.

An den Dichtabschnitt 17 schließt ein weiterer Gewindeabschnitt 22 an, welcher der Befestigung eines Hauptbremszylinder mit einem nicht gezeichneten Flansch an dem Bremskraftverstärker 1 dient. Der Gewindeabschnitt 22 begrenzt zusammen mit dem ersten Gewindeabschnitt 15 für den Stellbereich die axiale Länge für den Dichtabschnitt 17. Es ist darauf hinzuweisen, daß der Außendurchmesser des zweiten Gewindeabschnitt 22 kleiner ist, als der Kerndurchmesser des Gewindeabschnitt 15 für den Stellbereich.

Ein weiterer, wesentlicher Aspekt der Erfindung betrifft die Hemmung einer unbeabsichtigten Verdrehung des einstellbaren Anschlag 13, denn nach der vorgenommenen definierten Einstellung des Abstands zwischen den beiden Anschlägen 11,13 muß eine Einstellungsänderung während der Bremskraftverstärkermontage oder über den Betriebszeitraum des Bremskraftverstärkers unbedingt unterbunden werden. Anderenfalls könnte es zu einer Lockerung der Bremskraftverstärker-Hauptbremszylinder-Einheit kommen, welche die Funktionssicherheit nachhaltig und nachteilig beeinflussen würde. Für diese Hemmfunktion werden Maßnahmen vorgeschlagen, welche durch kraftschlüssige Lagesicherung des Anschlags 13 an dem Befestigungsmittel 2 ohne die Notwendigkeit separater Bauteile oder Betriebsstoffe auskommen. Dies kann auf unterschiedliche Arten insbesondere durch mittelbare oder unmittelbare Gewindedeformation bewirkt werden, so daß nachfolgend einige bevorzugte Varianten beschrieben werden. Einerseits können die Steigungen von Innengewinde in dem Anschlag 13 und dem Gewindeabschnitt 15 an dem Befestigungsmittel 2 in gewissem Maße Steigungsunterschiede aufweisen, welche zu einer Klemmwirkung führen. Gemäß einer anderen Ausführungsform weisen die Kern- oder Außendurchmesser der beiden beteiligten Bauteilgewinde Unterschiede insofern auf, als beispielsweise der Außendurchmesser des Gewindeabschnitt 15 auf dem Befestigungsmittel 2 größer toleriert ist, als der zugeordnete Kerndurchmesser des Gewinde in dem Anschlag 13. Diese Lehre kann quasi auch umgedreht auf den Kerndurchmesser des Gewindeabschnitt 15 auf dem Befestigungsmittel 2 in Paarung mit dem Nenndurchmesser des Gewinde in dem Anschlag 13 angewendet werden. Eine ähnliche Wirkung ist in besonders einfacher Art und Weise durch mittelbare Gewindeverformung (ohne unmittelbare Einwirkung auf den Gewindegang selbst) dadurch erzeugbar, daß der einstellbare Anschlag 13 mit radial von außen auf die Außenseite oder auf eine Kante aufgebrachte Einstemmungen versehen wird, wie dies beispielhaft in der Fig. 2 verdeutlicht ist. Durch diese Einstemmung ist der betreffende Gewindeabschnitt des Anschlags 13 gezielt sowie lokal beschränkt deformiert, und im aufgeschraubten Zustand wird eine Lagesicherung bewirkt. Beispielsweise kann auch eine am Umfang umlaufende, und den Gewindebereich entsprechend nach radial innen verformende Nut eingestemmt werden. Schließlich sind gezielte radiale Deformationen von dem Gewindeabschnitt 15 des Befestigungsmittels 2 oder des Rohlings für die Herstellung des Befestigungsmittels 2 mit dem Gewindeabschnitt 15 denkbar, um eine Klemmwirkung zusammen mit dem Anschlag 13 herzustellen. Beispielsweise weist das Befestigungsmittel 2 zumindest im Bereich des Gewindeabschnitt 15 einen unrunden, polygonprofilartigen Querschnitt auf, und die radial vorstehenden Gewindeteilbereiche weisen bezogen auf das zugeordnete Gewinde in dem Anschlag 13 (wie bereits oben beschrieben) Übermaß auf, so daß es zu der gewünschten Klemmwirkung kommt. Selbstverständlich kommen ferner Deformationen einer Stirnseite des Anschlags 13 mit dem Ziel einer Lagesicherung in dem gleichen Maße in Betracht, ohne die Erfindung zu verlassen.

Alternativ zu den beschriebenen Varianten ist es schließlich denkbar, in den Gewindeabschnitt 15 eine Axialnut einzubringen, in die vor dem aufdrehen des Anschlags 13 ein klemmendes Sicherungsteil, beispielsweise aus Kunststoffwerkstoff, eingelegt wird.

## Patentansprüche

1. Pneumatischer Bremskraftverstärker (1) mit Mitteln (2) zum Befestigen desselben an einer fahrzeugfesten Wand, welche das Innere des Bremskraftverstärkers (1) durchgreifen, wobei an einem ersten Ende (10) ein fester Anschlag (11) für ein erstes Gehäuseteil (4) und an einem zweiten Ende (12) ein mittels Drehbewegung einstellbarer Anschlag (13) für ein zweites Gehäuseteil (5) vorgesehen ist, und mit Mitteln (14) zum pneumatischen Abdichten von Gehäuseöffnungen für das Befestigungsmittel (2), **dadurch gekennzeichnet, daß** das Befestigungsmittel (2) einen sich an den Stellbereich des einstellbaren Anschlags (13) anschließenden glatten Dichtabschnitt (17) aufweist, und daß das Dichtungsmittel (14) mit multilateraler Anlage an einer kegelförmigen Anlagefläche (16) des einstellbaren Anschlags(13), dem glatten Dichtabschnitt (17) und dem zugeordneten Gehäuseteil (5) einen Spalt (21) zwischen Befestigungsmittel (2) und einstellbarem Anschlag (13) sowie einen Spalt (20) zwischen Anschlag (13) und Gehäuseteil (5) verschließt.

2. Pneumatischer Bremskraftverstärker nach Anspruch 1, **dadurch gekennzeichnet, daß** der Zwischenraum (18) zwischen dem Gehäuse (5), dem einstellbaren Anschlag (13)und dem Befestigungsmittel (2) kegeltorusform aufweist, und daß die Spalte (20,21) ausgehend von dem Inneren des Bremskraftverstärkers (1) in den Zwischenraum (18) münden.

3. Pneumatischer Bremskraftverstärker nach einem oder mehreren der vorhergehenden Ansprüche, **dadurch gekennzeichnet, daß** das Befestigungsmittel (2) im Anschluß an den Dichtabschnitt (17) mit einem Gewindeabschnitt (22) versehen ist, und daß der Gewindeabschnitt (22) zusammen mit dem Stellbereich des Anschlags (13) die axiale Länge des Dichtabschnitt (17) begrenzt.

4. Pneumatischer Bremskraftverstärker nach einem oder mehreren der vorhergehenden Ansprüche, **dadurch gekennzeichnet, daß** der Außendurchmesser des Gewindeabschnitt (22) kleiner ist, als ein Kerndurchmesser eines Gewinde (15) für den Stellbereich.

5. Pneumatischer Bremskraftverstärker nach Anspruch (2), **dadurch gekennzeichnet, daß** der Zwischenraum (18) zumindest mit einem Teilabschnitt mit der Vakuumkammer (7) verbunden ist, so daß ein Gehäuseteil (5) infolge eines Unterdruckes zwischen Zwischenraum (18) und Umgebungsatmosphäre für eine Selbstverstärkung der Dichtungswirkung in Richtung Dichtungsmittel (14) gedrückt wird.

6. Pneumatischer Bremskraftverstärker nach Anspruch 1, 2 oder 5, **dadurch gekennzeichnet, daß** die kegelförmige Anlagefläche (16), der Dichtabschnitt (17) und eine Innenseite (19) des Gehäuseteil (5) einen kegeltorusförmigen Zwischenraum (18) begrenzen.

7. Pneumatischer Bremskraftverstärker nach einem oder mehreren der vorhergehenden Ansprüche, **dadurch gekennzeichnet, daß** für eine Verdrehsicherung des einstellbaren Anschlag (13) auf dem Befestigungsmittel (2) Lagesicherungsmittel für eine kraftschlüssige Lagesicherung des Anschlags (13) an dem Befestigungsmittel (2) vorgesehen sind, und daß die Mittel unmittelbar an dem Anschlag (13) und / oder an dem Befestigungsmittel (2) angeordnet sind, ohne daß für diese Mittel zusätzliche Bauteile oder Betriebsstoffe erforderlich sind.

8. Pneumatischer Bremskraftverstärker nach Anspruch 7, **dadurch gekennzeichnet, daß** als Lagesicherungsmittel eine unmittelbare oder mittelbare Gewindedeformation vorgesehen ist.

## Claims

1. Pneumatic brake force booster (1) with means (2) for fastening the booster to a vehicle wall that extend through the interior of the brake force booster (1), wherein a fixed stop (11) for a first housing part (4) is provided on a first end (10) and a stop (13) for a second housing part (5) that is adjustable by means of rotation is provided on a second end (12), and with means (14) for the pneumatic sealing of housing openings for fastening means (2),
**characterized in that** the fastening means (2) has a smooth sealing portion (17) adjacent to the adjustment area of the adjustable stop (13), and **in that** the sealing means (14), by multilateral abutment on a conical abutment surface (16) of the adjustable stop (13), on the smooth sealing portion (17) and the associated housing portion (5), closes a slot (21) between the fastening means (2) and the adjustable stop (13) and a slot (20) between the stop (13) and the housing part (5).

2. Pneumatic brake force booster as claimed in claim 1,
**characterized in that** the space (18) between the housing (5), the adjustable stop (13), and the fastening means (2) has the shape of a conical torus, and **in that** the slots (20, 21), starting from the interior of the brake force booster (1), open into the space (18).

3. Pneumatic brake force booster as claimed in anyone or more of the preceding claims,
**characterized in that** the fastening means (2) adjacent to the sealing portion (17) includes a threaded portion (22), and **in that** the threaded portion (22) along with the adjustment area of the stop (13) limits the axial length of the sealing portion (17).

4. Pneumatic brake force booster as claimed in anyone or more of the preceding claims,
**characterized in that** the outside diameter of the threaded portion (22) is smaller than a core diameter of a thread (15) for the adjustment area.

5. Pneumatic brake force booster as claimed in claim 2,
**characterized in that** the space (18) with at least a partial portion is connected to the vacuum chamber (7) so that a housing part (5) is urged in the direction of the sealing means (14) due to a vacuum between the space (18) and the ambient atmosphere for the purpose of self-boosting of the sealing effect.

6. Pneumatic brake force booster as claimed in claim 1, 2, or 5,
**characterized in that** the conical abutment surface (16), the sealing portion (17) and an inner side (19) of the housing part (5) limit a conical torus-shaped space (18).

7. Pneumatic brake force booster as claimed in anyone or more of the preceding claims,
**characterized in that** for an anti-rotation mechanism of the adjustable stop (13) on the fastening means (2), there is provision of position-securing means for a force-locking securing-in-position of the stop (13) on the fastening means (2), and **in that** the means is arranged directly on the stop (13) and/or on the fastening means (2), without the necessity of additional components or working materials for said means.

8. Pneumatic brake force booster as claimed in claim 7,
**characterized in that** a direct or indirect thread deformation is provided as a position-securing means.

## Revendications

1. Servofrein pneumatique (1) comportant, pour sa fixation sur une paroi solidaire du véhicule, des moyens (2) qui traversent l'intérieur du servofrein (1), une butée (11) fixe étant prévue à une première extrémité (10) pour une première partie (4) du boîtier et, à une deuxième extrémité (12), une butée (13) réglable par un mouvement de rotation pour une deuxième partie (5) du boîtier, et comportant des moyens (14) pour l'étanchéité pneumatique d'ouvertures du boîtier pour le moyen de fixation (2), **caractérisé en ce que** le moyen de fixation (2) comporte un tronçon d'étanchéité (17) lisse se raccordant à la zone de réglage de la butée réglable (13), et **en ce que**, par application multilatérale contre une surface de contact (16) de forme conique de la butée réglable (13), le moyen d'étanchéité (14) ferme, avec le tronçon d'étanchéité (17) lisse et la partie (5) associée du boîtier, une fente (21) entre le moyen de fixation (2) et la butée réglable (13), ainsi qu'une fente (20) entre la butée (13) et la partie (5) du boîtier.

2. Servofrein pneumatique selon la revendication 1, **caractérisé en ce que** l'interstice (18) entre le boîtier (5), la butée réglable (13) et le moyen de fixation (2), présente la forme d'un tore conique, et **en ce que** les fentes (20, 21), partant de l'intérieur du servofrein (1), débouchent dans l'interstice (18).

3. Servofrein pneumatique selon une ou plusieurs des revendications précédentes, **caractérisé en ce qu'**à la suite du tronçon d'étanchéité (17), le moyen de fixation (2) est pourvu d'un tronçon fileté (22), et **en ce que** le tronçon fileté (22) limite, avec la zone de réglage de la butée (13), la longueur axiale du tronçon d'étanchéité (17).

4. Servofrein pneumatique selon une ou plusieurs des revendications précédentes, **caractérisé en ce que** le diamètre extérieur du tronçon fileté (22) est inférieur à un diamètre du noyau d'un filetage (15) pour la zone de réglage.

5. Servofrein pneumatique selon la revendication 2, **caractérisé en ce que** l'interstice (18) est relié, au moins par un tronçon partiel, à la chambre sous vide (7), ce qui fait que par suite d'une dépression entre l'interstice (18) et l'atmosphère ambiante, une partie (5) du boîtier est pressée en direction du moyen d'étanchéité (14), pour une auto-amplification de l'effet d'étanchéité.

6. Servofrein pneumatique selon la revendication 1, 2 ou 5, **caractérisé en ce que** la surface de contact (16) de forme conique, le tronçon d'étanchéité (17) et un côté intérieur (19) de la partie (5) du boîtier délimitent un interstice (18) en forme de tore conique.

7. Servofrein pneumatique selon une ou plusieurs des revendications précédentes, **caractérisé en ce que** pour un blocage en rotation de la butée réglable (13) sur le moyen de fixation (2), il est prévu des moyens de blocage de la position pour un blocage à force de la position de la butée (13) sur le moyen de fixation (2), et **en ce que** les moyens sont disposés directement sur la butée (13) et/ou sur le moyen de fixation (2), sans que pour ces moyens des composants supplémentaires ou des carburants soient nécessaires.

8. Servofrein pneumatique selon la revendication 7, **caractérisé en ce qu'**une déformation directe ou indirecte du filetage est prévue comme moyen de blocage de la position.
